# EUROPÄISCHE PATENTSCHRIFT

(11) **EP 2 792 627 B1**
(45) Veröffentlichungstag und Bekanntmachung des Hinweises auf die Patenterteilung: **03.04.2019**
(21) Anmeldenummer: 13195963.7
(22) Anmeldetag: 06.12.2013
(51) Int. Cl.: B65G 49/00

(54) **Docking-System**
Docking system
Dispositif d'amarrage

(30) Priorität: 02.04.2013 DE 202013101407 U
(43) Veröffentlichungstag der Anmeldung: 22.10.2014
(73) Patentinhaber: Hager, Hans, 86756 Reimlingen (DE)
(72) Erfinder: Hager, Hans, 86756 Reimlingen (DE)
(74) Vertreter: Jannig, Peter

(56) Entgegenhaltungen:
- JP-A- 2012 523 951
- US-A1- 2005 139 451
- US-A1- 2010 326 832
- US-A1- 2012 006 261

## Beschreibung

Die vorliegende Erfindung betrifft eine Vorrichtung gemäß dem Oberbegriff des Patentanspruchs 1.

Eine solche Vorrichtung kann beispielsweise bei der Herstellung von Kraftfahrzeugen, genauer gesagt bei der Herstellung der Rohkarossen von Kraftfahrzeugen zum Einsatz kommen. Der zu bewegende Gegenstand könnte in diesem Fall ein sogenannter (Seitenwand-)Spannrahmen sein, und das Transport-System ein System, durch welches der Spannrahmen in die jeweils gewünschte Position bewegt wird. Dabei ist der Spannrahmen über das Docking-System mit dem Transport-System verbunden.

Zum besseren Verständnis der an ein solches Docking-System gestellten Anforderungen und der auftretenden Probleme wird zunächst die Rohkarossen-Herstellung genauer beschrieben.

Die Herstellung der Rohkarossen erfolgt zumindest in der Großserienfertigung Schritt für Schritt in mehreren nacheinander durchlaufenen Arbeitsstationen, wobei in jeder Arbeitsstation an der bis dahin hergestellten Rohkarosse ein bestimmter weiterer Rohkarossenherstellungsschritt durchgeführt wird. Zwischen den Arbeitsstationen sind Fördervorrichtungen vorgesehen, durch welche die bis dahin fertig gestellten Rohkarossen von Arbeitsstation zu Arbeitsstation transportiert werden. Der Transport erfolgt zeitgesteuert. D.h., die bis dahin fertig gestellten Rohkarossen bleiben jeweils eine ganz bestimmte Zeit in den Arbeitsstationen, wobei die Verweilzeit für alle Arbeitsstationen gleich ist, so dass alle gerade in der Herstellung befindliche Rohkarossen synchron bewegt werden können. Die in den jeweiligen Arbeitsstationen ausgeführten Rohkarossenherstellungsschritte dauern vorzugsweise in etwa gleich lang. Unter keinen Umständen darf diese Zeit länger sein als die Verweildauer der bis dahin fertiggestellten Rohkarossen in den Arbeitsstationen, denn ein in einer Arbeitsstation nicht abgeschlossener Rohkarossenherstellungsschritt kann in der nachfolgenden Arbeitsstation nicht fortgesetzt werden. Die gesamte Anordnung wird als Rohkarossenstraße bezeichnet.

In einer der entlang der Rohkarossenstraße vorgesehenen Arbeitsstationen werden die Seitenwände der herzustellenden Rohkarosse mit den bis dahin zusammengesetzten weiteren Bestandteilen der Rohkarosse verbunden. Diese Verbindung erfolgt üblicherweise durch Schweißen. Aufgrund der in der Regel relativ kurzen Verweildauer der Rohkarossen in den Arbeitsstationen findet im Allgemeinen jedoch kein vollständiges Verschweißen statt. Vielmehr wird meistens nur eine punktweise Fixierung durchgeführt. Unabhängig hiervon ist es von größter Bedeutung, dass die Seitenwände und der Rest der bis dahin zusammengebauten Rohkarosse exakt die bestimmungsgemäße Relativlage zueinander einnehmen und in dieser Lage fixiert werden. In dieser Arbeitsstation erfolgte Fehlausrichtungen können in den nachfolgenden Arbeitsstationen nicht mehr korrigiert werden. Die maximalen Toleranzen liegen im Bereich von einigen zehntel Millimetern, vorzugsweise sogar noch darunter.

Hierfür werden unter anderem entsprechend ausgebildete (Seitenwand-)Spannvorrichtungen benötigt. Diese Spannvorrichtungen sind im betrachteten Beispiel an die Seitenwände der Rohkarossen angepasste (Seitenwand-)Spannrahmen, durch welche die Seitenwände in die bestimmungsgemäße Form sowie die bestimmungsgemäße Position und die bestimmungsgemäße Lage in Bezug auf den Rest der bis dahin fertiggestellten Rohkarosse gebracht werden.

Die in der betreffenden Arbeitsstation ablaufenden Vorgänge sind wie folgt:
Zunächst wird die bis dahin fertig gestellte Rohkarosse (durch eine Bewegung in x-Richtung) in die betreffende Arbeitsstation transportiert. Dort angekommen, wird die Rohkarosse in einer exakt vorgegebenen Position auf ein im Folgenden als Präsisionsstahlbau bezeichnetes Gestell abgesetzt und der Boden der Rohkarosse darauf aufgespannt. Sodann werden (durch eine Bewegung in y-Richtung) gleichzeitig von links und von rechts jeweils ein (Seitenwand-)Spannrahmen an die Rohkarosse herangefahren. Das Heranfahren erfolgt durch zwei Portalschlitten (ein Portalschlitten pro Spannrahmen), die auf einer sich über die Rohkarosse hinweg erstreckenden Brücke laufen. Die Portalschlitten und die von diesen getragenen Spannrahmen werden so lange in y-Richtung bewegt, bis sie die gewünschte Position erreicht haben. Die gewünschte Position der Spannrahmen ist die Position, in welcher sich die von diesen getragenen (darauf aufgespannten) Seitenwände der Rohkarosse in der gewünschte Relativlage in Bezug zum Rest der Rohkarosse befinden.

Zum Bringen der Spannrahmen in die gewünschte Position gibt es verschiedene Möglichkeiten, auf die hier jedoch nicht näher eingegangen werden soll. In diesem Zusammenhang wird beispielsweise auf die DE 20 2009 015 378 U1 verwiesen.

Nachdem die Seitenwände der Rohkarosse ihre bestimmungegemäße Form, Position, und Lage erreicht haben, werden die Seitenwände und der Rest der bis dahin fertiggestellten Rohkarosse beispielsweise durch ein Verschweißen miteinander verbunden.

Wenn in der Rohkarossenstraße abwechselnd Rohkarossen für unterschiedliche Fahrzeuge hergestellt werden sollen, kann es erforderlich sein, abwechselnd unterschiedliche Seitenwände und damit auch unterschiedliche Spannrahmen zu verwenden.

Dies kann beispielsweise dadurch realisiert werden, dass an jedem Portalschlitten nicht nur eine einzige z-Achse mit einem daran angebrachten Spannrahmen, sondern zwei z-Achsen mit jeweils einem daran angebrachten Spannrahmen vorgesehen sind. Dann kann der jeweils benötigte Spannrahmen aus zwei unterschiedlichen Spannrahmen ausgewählt werden und der jeweils nicht benötigte Spannrahmen (beispielsweise durch ein Hochfahren der den nicht benötigten Spannrahmen tragenden z-Achse) aus dem Weg gefahren werden. Alternativ oder zusätzlich kann vorgesehen werden, auf jeder Seite der Rohkarosse nicht nur einen, sondern zwei Portalschlitten vorzusehen, wobei jeder Portalschlitten einen oder zwei Spannrahmen tragen kann. In diesem Fall kann der jeweils benötigte Spannrahmen aus bis zu vier unterschiedlichen Spannrahmen ausgewählt werden und die jeweils nicht benötigten Spannrahmen (beispielsweise durch ein entsprechendes Verfahren des gerade nicht benötigten Portalschlittens und ein Hochfahren der den nicht benötigten Spannrahmen tragenden z-Achse des benötigten Portalschlittens) aus dem Weg gefahren werden.

Dies erfordert allerdings einen sehr hohen Aufwand. Zudem ist die Auswahl der verwendbaren Spannrahmen immer noch stark beschränkt.

Eine weniger aufwendige und einschränkende Alternative hierzu besteht darin, dass bei Bedarf der zuletzt verwendete Spannrahmen in einem Spannrahmen-Lager abgesetzt wird und von dem ihn bewegenden Transport-System (Portalschlitten, z-Achse, ...) abgedockt wird, und ein anderer Spannrahmen angedockt und weiterverwendet wird.

Dies ist jedoch ebenfalls mit erheblichen Problemen verbunden. Der Spannrahmen muss sich nämlich auch bei wiederholtem Andocken an das diesen bewegende Transport-System stets in der genau gleichen Relativlage zum Transportsystem befinden, und muss diese Relativlage im angedockten Zustand auch dauerhaft exakt beibehalten. Dies ist erforderlich, weil anderenfalls die Positionierung der Seitenwände mit der geforderten Genauigkeit im Bereich von zehntel oder gar hundertstel Millimeter nicht erreichbar wäre. Dies wiederum erfordert es, dass der Spannrahmen und das Transport-System auch schon während des Andockens jeweils ganz bestimmte Relativlagen zueinander einnehmen müssen. Schon geringste Abweichungen können zur Folge haben, dass die beim Andocken miteinander in Eingriff zu bringenden Elemente verkanten und nicht weiter in Eingriff bringbar sind und/oder auf die in Eingriff zu bringenden Elemente, oder auf den Spannrahmen oder auf das Transport-System, so große Kräfte wirken, das Beschädigungen oder ein übermäßiger Verschleiß auftreten. Diese Probleme können schon dadurch verursacht werden, dass neu anzukoppelnder Spannrahmen aufgrund eines darunter geratenen Fremdkörpers nicht exakt gerade steht. Entsprechende Probleme können auch beim Abdocken auftreten. Erschwerend kommt noch hinzu, dass zum Andocken und Abdocken nur sehr wenig Zeit zur Verfügung steht. Ein Wechsel des Spannrahmens darf hat nämlich vorzugsweise keine Verlängerung der Verweilzeit der Rohkarosse in der Arbeitsstation zur Folge haben.

Entsprechende Probleme treten nicht nur im vorliegend beschriebenen Beispiel auf, sondern auch dann, wenn ein anderes Transport-System zum Einsatz kommt und/oder wenn der zu bewegende Gegenstand kein Spannrahmen, sondern ein anderer Gegenstand ist.

Weiterer Stand der Technik ist aus den Dokumenten US 2005/139451 A1, US 2012/006261 A1, US 2010/326832 A1 und JP 2012 523951 A bekannt, wobei in der US 2005/139451 A1 ein System gemäß dem Oberbegriff des Patentanspruchs 1 beschrieben ist. Diesen Dokumenten ist jedoch keine zufriedenstellende Lösung der vorstehend beschriebenen Probleme entnehmbar. Der vorliegenden Erfindung liegt daher die Aufgabe zugrunde, die Vorrichtung gemäß dem Oberbegriff des Patentanspruchs 1 derart weiterzubilden, dass mit geringem Aufwand unter allen Umständen ein schnelles und zuverlässiges An- und Abdocken von Gegenständen an ein Transport-System möglich ist.

Diese Aufgabe wird durch die in Patentanspruch 1 beanspruchte Vorrichtung gelöst.

Dieser Einstellmechanismus ermöglicht es unter anderem, dass das Docking-System bei Bedarf, also beispielsweise während des An- und Abdockens des zu transportierenden Gegenstandes relativ zum Transport-System bewegbar ist, und ansonsten, insbesondere beispielsweise während des Transports des zu transportierenden Gegenstandes, keine Relativbewegung zwischen Docking-System und Transport-System möglich ist.

Vorteilhafte Weiterbildungen der Erfindung sind der folgenden Beschreibung, den Unteransprüchen, und den Figuren entnehmbar.

Die Erfindung wird nachfolgend anhand eines Ausführungsbeispiels unter Bezugnahme auf die Figuren näher erläutert. Es zeigen
- Figur 1: eine schematische Ansicht einer Anordnung, welche das hier vorgestellte Docking-System enthält,
- Figur 2: eine Schnittdarstellung eines Teils des Docking-Systems der Anordnung gemäß Figur 1,
- Figur 3A: eine frontale Draufsicht auf das vordere Ende eines Schiebers, durch welchen einstellbar ist, ob das Docking-System der Anordnung gemäß Figur 1 relativ in Bezug zu anderen Komponenten der Anordnung gemäß Figur 1 bewegbar ist oder nicht,
- Figur 3B: eine Draufsicht auf den Schieber gemäß Figur 3A von oben, und
- Figur 3C: eine Seitenansicht des Schiebers gemäß den Figuren 3A und 3B.

Zur Vermeidung von Missverständnissen sei darauf hingewiesen, dass die Figuren nur stark schematisierte Darstellungen zeigen und dass darüber hinaus auch nur jeweils diejenigen Komponenten der dargestellten Anordnungen gezeigt und beschrieben sind, die vorliegend von besonderem Interesse sind.

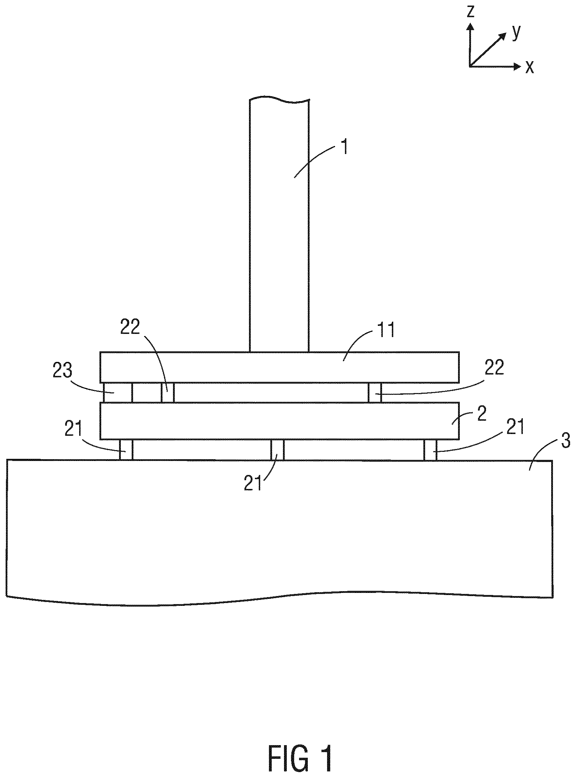

Die in der Figur 1 veranschaulichte Anordnung enthält eine z-Achse 1, eine an einem Ende der z-Achse 1 vorgesehene und noch der z-Achse zuzurechnende Platte 11, ein mit der Platte 11 der z-Achse 1 verbundenes Docking-System 2, und einen mit dem Docking-System 2 verbundenen Spannrahmen 3.

Der Spannrahmen 3 ist im betrachteten Beispiel eine Vorrichtung, die bei der Herstellung von Rohkarossen von Kraftfahrzeugen zum Einsatz kommt. Genauer gesagt handelt es sich um eine Vorrichtung, durch welche die Seitenwände der Rohkarosse in die gewünschte Form und die gewünschte Relativlage in Bezug zum Rest der Rohkarosse gebracht werden, bevor sie miteinander verschweißt werden.

Das Docking-System 2 ist zwischen dem Spannrahmen 3 und der Platte 11 der z-Achse 1 angeordnet und sowohl mit dem Spannrahmen 3 als auch mit der Platte 11 verbunden. Im Ergebnis ist der Spannrahmen 3 über das Docking-System 2 mit der z-Achse 1 verbunden und kann durch diese wunschgemäß bewegt werden. Der Vollständigkeit halber sei angemerkt, dass das Docking-System 2 nicht nur zur mechanischen Verbindung des Spannrahmens 3 mit der z-Achse 1 dient. Das Docking-System 2 verfügt darüber hinaus über Anschlüsse, über welche der Spannrahmen 3 auch elektrisch, optisch, hydraulisch, pneumatisch oder sonstige Art und Weise mit anderen externen Einrichtungen gekoppelt werden kann. Da vorliegend in erster Linie die mechanische Verbindung interessiert, wird auf die weiteren Verbindungsmöglichkeiten nicht näher eingegangen.

Die z-Achse 1 ist Teil eines Transportsystems, durch welches der Spannrahmen 3 in eine gewünschte Position und Lage gebracht werden kann (wenn ein Spannrahmen 3 angedockt ist), bzw. das Docking-System 2 in eine gewünschte Position und Lage gebracht werden kann (wenn kein Spannrahmen 3 angedockt ist und das Docking-System 2 zu einem neu anzudockenden Spannrahmen 3 bewegt werden muss). In betrachteten Beispiel ist die z-Achse eine vertikal angeordnete, in z-Richtung ein- und ausfahrbare Teleskopstange. Das obere Ende der z-Achse kann an einem in der Figur 1 nicht gezeigten Schlitten befestigt sein, welcher zusammen mit der z-Achse und den daran vorgesehenen weiteren Anlagenkomponenten in x-Richtung und/oder in y-Richtung bewegbar ist. Darüber hinaus kann vorgesehen sein, dass die z-Achse 1 um ihre Längsachse drehbar ist.

Vorliegend kommt es insbesondere auf den Aufbau und die Funktion des Docking-Systems 2 an. Das hier vorgestellte Docking-System 2 zeichnet sich unter anderem dadurch aus, dass es einen Einstellmechanismus enthält, über welchen einstellbar ist, ob das Docking-System 2 im mit der z-Achse verbundenen Zustand relativ zur z-Achse 1 bzw. zu dem die z-Achse enthaltenden Transportsystem bewegbar ist oder nicht. Dies wird später noch genauer beschrieben

Es sei bereits an dieser Stelle ausdrücklich darauf hingewiesen, dass die in der Figur 1 gezeigte Anordnung nur als ein spezielles Beispiel für den Einsatz des hier vorgestellten Docking-Systems anzusehen ist. Das Docking-System kann auch in beliebigen anderen Anordnungen zum Einsatz kommen. Es kann nicht nur zum Andocken von Spannrahmen 3 an eine z-Achse verwendet werden, sondern eignet sich prinzipiell zum Andocken eines beliebigen Gegenstandes an ein beliebiges Transportsystem.

Das Docking-System 2 ist über in der Figur 1 nur stark schematisiert dargestellte Verbindungsmittel mit der Platte 11 und dem Spannrahmen 3 verbunden.

Die besagten Verbindungsmittel umfassen erste Verbindungsmittel 21 zur Verbindung des Docking-Systems 2 mit dem Spannrahmen 3, und zweite Verbindungsmittel 22 zur Verbindung des Docking-Systems 2 mit der Platte 11.

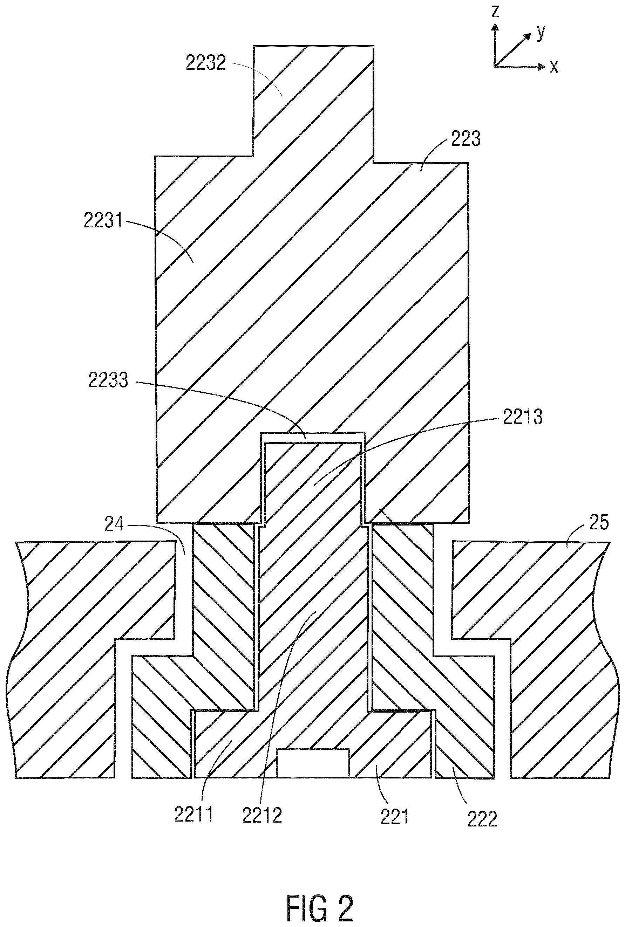

Die ersten Verbindungsmittel 21 werden durch Bolzen gebildet, die beispielsweise durch eine Schraubverbindung fest mit dem Docking-System 2 verbunden sind und von diesem senkrecht nach unten ragen. Die Bolzen 21 sind dazu ausgelegt, in zugeordnete Öffnungen des Spannrahmens 3 eingeführt zu werden und bei Erreichen der bestimmungsgemäßen Relativlage in Bezug auf die Öffnungen in dieser Lage durch einen in den Figuren nicht gezeigten Verriegelungsmechanismus fixiert zu werden. Der Verriegelungsmechanismus kann elektrisch, pneumatisch, hydraulisch oder eine beliebige sonstige Art und Weise betätigbar sein. Solche Verbindungsmittel und Verriegelungsmechanismen sind bekannt und bedürfen keiner näheren Erläuterung. Die über die Verbindungsmittel 21 erzeugte Verbindung zwischen dem Docking-System 2 und dem Spannrahmen 3 ist eine starre Verbindung, die zu keinem Zeitpunkt eine Relativbewegung zwischen dem Docking-System 2 und dem Spannrahmen 3 zulässt. Darüber hinaus sind im verbundenen Zustand weder zwischen den Verbindungsmitteln 21 und dem Docking-System 2 noch zwischen den Verbindungsmitteln 21 und dem Spannrahmen 3 irgendwelche Relativbewegungen möglich. In der Figur 2 sind drei Bolzen 21 eingezeichnet. Wie viele Bolzen 21 vorzusehen sind, hängt vom jeweiligen Anwendungsfall ab; die Anzahl der Bolzen 21 kann daher beliebig viel kleiner oder größer sein.

Die zweiten Verbindungsmittel 22 werden ebenfalls durch eine Art Bolzen gebildet, die jedoch, wie später noch genauer beschrieben wird, aus mehreren Einzelteilen zusammengesetzt sind. Die Bolzen 22 sind auf eine später noch genauer beschriebene Art und Weise lose mit dem Docking-System 2 verbunden und ragen von diesem im wesentlichen senkrecht nach oben. Die lose Verbindung zwischen Docking-System 2 und den Bolzen 22 ist derart, dass sich das Docking-System 2 und der Bolzen 22 grundsätzlich relativ zueinander bewegen können, wobei es jedoch zusätzlich von einem in der Figur 1 nur schematisch als Block 23 dargestellten und später noch genauer beschriebenen Einstellmechanismus abhängt, ob sich das Docking-System 2 und die Bolzen 22 relativ zueinander bewegen können oder nicht. Die Bolzen 22 sind dazu ausgelegt, durch eine Schraubverbindung fest mit der Platte 11 der z-Achse 1 verbunden zu werden, so dass sich die Bolzen 22 und die Platte 11 nicht relativ zueinander bewegen können. Aufgrund der Tatsache, dass sich das Docking-System 2 relativ zu den Bolzen 22 bewegen kann, kann jedoch auch eine relative Bewegung zwischen dem Docking-System 2 und der Platte 11 erfolgen, wobei es jedoch wiederum von dem bereits erwähnten Einstellmechanismus 23 abhängt, ob sich das Docking-System 2 und die Platte 11 relativ zueinander bewegen können oder nicht.

Zur Vermeidung von Missverständnissen sei darauf hingewiesen, dass die Platte 11 fest mit der z-Achse 1 verbunden ist und nicht relativ zu dieser bewegt werden kann. Die z-Achse 1 und die daran angeordnete Platte 11 können zu keinem Zeitpunkt unabhängig voneinander bewegt werden.

Der genaue Aufbau eines Bolzens 22 und dessen Verbindung mit dem Docking-System 2 sind in der Figur 2 veranschaulicht.

Der Bolzen 22 besteht im betrachteten Beispiel aus einer ersten Schraube 221, einer Hülse 222, und einer zweiten Schraube 223. Er ist dazu ausgelegt, sich durch eine im Docking-System 2 vorgesehene Durchgangsöffnung 24 hindurch zu erstrecken, und so montiert zu werden, dass er diese Durchgangsöffnung 24 nicht verlassen kann.

Im betrachteten Beispiel durchläuft die Durchgangsöffnung 24 nicht das komplette Docking-System 2. Genauer gesagt ist es so, dass das Docking-System 2 aus einer Vielzahl von Einzelteilen zusammengesetzt ist, welche unter anderem zwei übereinander angeordnete und fest miteinander verbundene Platten umfassen, wobei die Durchgangsbohrung 24 nur die obere Platte 25 des Docking-Systems 2 durchläuft. Die Durchgangsöffnung 24 durchläuft die Platte 25 vertikal. Sie ist zylindrisch und hat einen stufenförmigen Querschnitt, wobei der den größeren Durchmesser aufweisende Bereich unten zu liegen kommt.

Die erste Schraube 221 hat einen zylinderförmigen Kopf 2211 und einen sich daran anschließenden, ebenfalls zylinderförmigen Schaft 2212, wobei der Kopf 2211 einen größeren Durchmesser aufweist als der Schaft 2212, und wobei auf dem vorderen Bereich 2213 des Schaftes (oder über die gesamte Länge des Schaftes) ein Außengewinde ausgebildet ist. An der Stirnseite des Kopfes 2211 ist eine Struktur ausgebildet, die ein Ansetzen eines Werkzeuges zum Drehen der ersten Schraube 221 aufweist. Diese Struktur ist im betrachteten Beispiel eine für einen Innensechskantschlüssel ausgelegte Vertiefung, kann aber auch eine beliebige andere Struktur sein.

Die Hülse 222 ist zylinderförmig und hat einen stufenförmigen Querschnitt. Genauer gesagt weist sie einen untern Bereich auf, der sowohl einen größeren Innendurchmesser als auch einen größeren Außendurchmesser hat als der sich daran anschließende obere Bereich der Hülse 222.

Der untere Bereiches der Hülse 222 hat einen Innendurchmesser, der etwas größer ist als der Außendurchmesser des Kopfes 2211 der ersten Schraube 221, und hat eine Höhe, die etwa der Höhe des Kopfes 2211 der ersten Schraube 221 entspricht. Der Innendurchmesser des oberen Bereiches der Hülse 222 ist etwas größer als der Außendurchmesser des Schaftes 2212 der ersten Schraube 221, aber kleiner als der Außendurchmesser des Kopfes 2211 der ersten Schraube 221. Die genannten Durchmesserdifferenzen sind so groß, dass die erste Schraube 221 ohne wesentliche Behinderungen durch die Hülse 222 von unten her in die Hülse 222 eingesteckt und gedreht werden kann; die erste Schraube 221 kann dabei bis zum Anschlag des Kopfes 2211 an der innen in der Hülse 222 vorhandenen Stufe eingeführt werden.

Der untere Bereich der Hülse 222 hat einen Außendurchmesser, der deutlich kleiner ist als der Durchmesser des den größeren Durchmesser aufweisenden unteren Bereiches der Durchgangsbohrung 24, und hat eine Höhe, die etwa der Höhe des den größeren Durchmesser aufweisenden unteren Bereiches der Durchgangsbohrung 24 entspricht. Der obere Bereich der Hülse 222 hat einen Außendurchmesser, der deutlich kleiner ist als der Durchmesser des den kleineren Durchmesser aufweisenden oberen Bereiches der Durchgangsbohrung 24, und hat eine Höhe, die deutlich größer ist als die Höhe des den kleineren Durchmesser aufweisenden oberen Bereiches der Durchgangsbohrung 24. Wie später noch besser verstanden werden wird, bewirken die genannten Durchmesser- und Höhendifferenzen, dass sich der Bolzen 22 und die Platte 25, und damit also auch der Bolzen 22 und das Docking-System 2 auch im verbundenen Zustand relativ zueinander bewegen können. Im betrachteten Beispiel können Relativbewegungen sowohl in x-Richtung als auch in y-Richtung als auch in z-Richtung erfolgen. Dabei hängt es von der Größe der genannten Durchmesser- und Höhendifferenzen ab, in welchem Umfang Relativbewegungen möglich sind. Folglich wird es vorzugsweise vom gewünschten Umfang der Relativbewegungen abhängig gemacht, wie groß die genannten Durchmesser- und Höhendifferenzen sind.

Die zweite Schraube 223 weist einen Kopf 2231 und einen Schaft 2232 mit Außengewinde auf.

Der Kopf 2231 der zweiten Schraube 223 weist im Zentrum seiner Stirnfläche eine in Längsrichtung der Schraube 223 verlaufende Vertiefung 2233 mit einem Innengewinde auf. Das Innengewinde ist komplementär zu dem am vorderen Ende 2213 des Schaftes der ersten Schraube 221 vorhandenen Gewinde ausgebildet, so dass die erste Schraube 221 in die Vertiefung der zweiten Schraube 223 einschraubbar ist. An den seitlichen Außenflächen des Kopfes 2231 ist eine Struktur ausgebildet, die ein Ansetzen eines Werkzeuges zum Drehen der zweiten Schraube 223 aufweist. Diese Struktur ist im betrachteten Beispiel Außensechskantstruktur zum Ansetzen eines entsprechenden Schraubenschlüssels, kann aber auch eine beliebige andere Struktur sein.

Der Schaft 2232 der zweiten Schraube 223 ist dazu ausgelegt, in eine in den Figuren nicht gezeigte zugeordnete vertikale Öffnung mit Innergewinde in der Platte 11 der z-Achse 1 eingedreht zu werden.

Die Montage des Docking-Systems 2 an der Platte 11 der z-Achse 1 unter Verwendung der Verbindungsmittel 22 erfolgt folgendermaßen. Zuerst wird die zweite Schraube 223 mit dem Schaft 2232 voraus bis zum Anschlag in die bereits erwähnte zugeordnete vertikale Öffnung in der Platte 11 eingeschraubt. Anschließend wird auf die erste Schraube 221 die Hülse 222 aufgesetzt, so dass der Kopf 2211 der ersten Schraube 221 in dem den größeren Innerdurchmesser aufweisenden Bereich der Hülse 222 zu liegen kommt. Sodann wird die erste Schraube 221 zusammen mit der Hülse 222 von unten in die in der Platte 25 vorgesehene Durchgangsöffnung 24 gesteckt und bis zum Anschlag in die Vertiefung 2233 im Kopf 2231 der zweiten Schraube 223 eingeschraubt.

Es dürfte einleuchten und bedarf keiner näheren Erläuterung, dass zumindest teilweise auch eine andere Reihenfolge der Montageschritte vorgesehen werden kann.

In dem daraus resultierenden Zustand ist die Hülse 222 zwischen der ersten Schraube 221 und der zweiten Schraube 223 eingeklemmt, so dass zwischen den Einzelteilen des Bolzens 22 keine wie auch immer geartete Relativbewegungen erfolgen können. Durch das Einschrauben der zweiten Schraube 223 bis zum Anschlag in die Platte 11 der z-Achse 1 können auch zwischen der Platte 11 und dem Bolzen 22 keinerlei Relativbewegungen stattfinden. Aufgrund der vorstehend schon genau beschriebenen Durchmesser- und Höhendifferenzen zwischen der Hülse 222 und der Durchgangsöffnung 24 kann sich die Platte 25 und damit das ganze Docking-System 2 relativ zum Bolzen 22 und damit auch relativ zur Platte 11 der z-Achse 1 bewegen.

Wie vorstehend bereits erwähnt wurde, hängt es jedoch zusätzlich von einem nun beschriebenen Einstellmechanismus ab, ob die genannten Relativbewegungen tatsächlich möglich sind oder nicht.

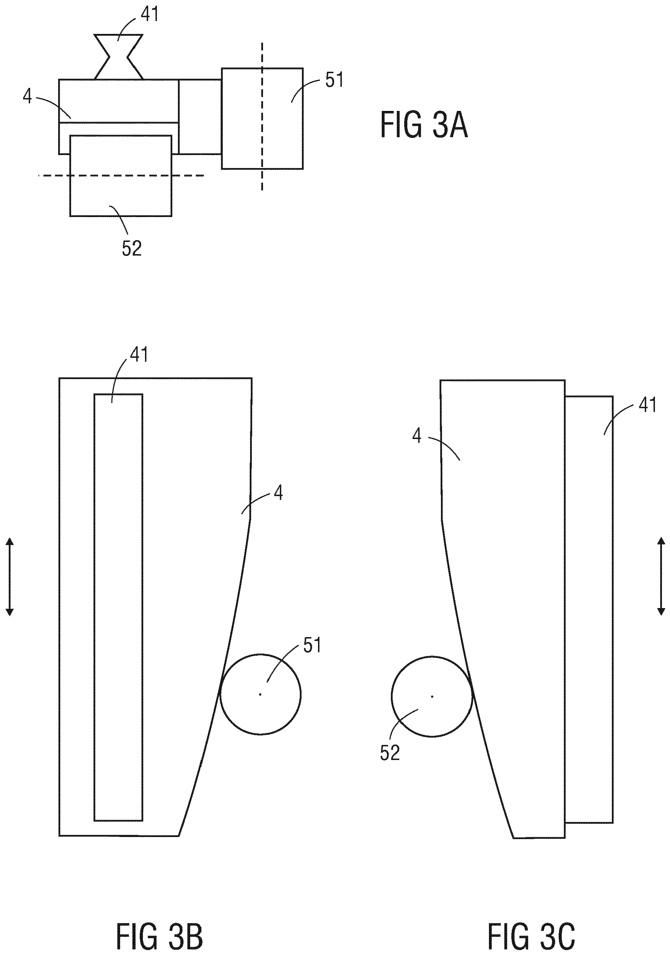

Wie in der Figur 1 schematisch dargestellt ist, ist der Einstellmechanismus 23 zwischen der Platte 11 und dem Docking-System 2 angeordnet. Die Figuren 3A bis 3C zeigen nähere Einzelheiten des Aufbaus des Einstellmechanismus 23. Dabei zeigt die Figur 3B einen später noch genauer beschriebenen Schieber 4 in einer Draufsicht von oben, die Figur 3A eine Ansicht des Schiebers 4 von vorne, und die Figur 3B eine Seitenansicht des Schiebers 4.

Der Einstellmechanismus 23 enthält den bereits erwähnten Schieber 4, einen in den Figuren nicht gezeigten Antriebsmechanismus zum Bewegen des Schiebers 4, Führungselemente zum Führen des Schiebers 4, und mehrere Rollen, an welchen der Schieber 4 entlang bewegt wird.

Der Schieber 4 ist ein im wesentlichen quaderförmiges Element das zwischen der Platte 11 und dem Docking-System 2 parallel zur Platte 11 verschiebbar ist. Der Schieber 4 kann nur entlang einer ganz bestimmten Richtung hin- und herbewegt werden, wobei diese Richtung durch die erwähnten Führungselemente vorgegeben wird. Die Führungselemente umfassen eine erste Führungsschiene 41, welche auf der Oberseite des Schiebers 4 angeordnet und fest mit diesem verbunden ist, und eine mit dem ersten Führungselement 41 in Eingriff bringbare, in den Figuren nicht gezeigte zweite Führungsschiene, welche an der Unterseite der Platte 11 der x-Achse 1 befestigt ist. Die erste Führungsschiene 41 und die zweite Führungsschiene sind komplementär zueinander ausgebildet und darüber hinaus so gestaltet, dass die erste Führungsschiene 41 zusammen mit dem Schieber 4 in der zweiten Führungsschiene hängt. Im betrachteten Beispiel wird dies dadurch realisiert, dass die erste Führungsschiene 41 einen schwalbenschwanzförmigen Querschnitt aufweist, und die zweite Führungsschiene eine schwalbenschwanzförmige Nut aufweist, und die erste Führungsschiene 41 innerhalb der in der zweiten Führungsschiene vorhandenen Nut läuft. Es dürfte einleuchten und bedarf keiner näheren Erläuterung, dass hierauf keine Einschränkung besteht. Es kann stattdessen auch eine Vielzahl anderer Führungselemente zum Einsatz kommen.

Der Schieber 4 ist somit also längs der ersten bzw. zweiten Führungsschiene hin und herbewegbar. Der Antrieb kann beispielsweise durch eine in den Figuren nicht gezeigte Gewindespindel erfolgen.

Der Schieber 4 kommt beim Hin- und Herbewegen mit auf dem Docking-System 2 montierten Rollen 51, 52 in Kontakt.

Wie die Rolle 51 in Bezug zum Schieber 4 angeordnet ist, ist in Figur 3B veranschaulicht, welche eine Draufsicht auf den Schieber 4 von oben zeigt. Der Schieber 4 ist längs des in der Figur gezeigten Doppelpfeils hin- und herbewegbar. Das vordere Ende des Schiebers 4 ist das in der Figur 3B unten dargestellte Ende des Schiebers. Die Rolle 51 weist eine vertikale Drehachse auf und ist neben einer der in Bewegungsrichtung verlaufenden seitlichen Flanken, im betrachteten Beispiel neben der in der Figur 3B rechts dargestellten Flanke des Schiebers 4 angeordnet, so dass die betreffende Flanke mit der Rolle 51 in Kontakt kommen kann. Die mit der Rolle 51 in Kontakt kommende Flanke des Schiebers 4 verläuft nicht, oder zumindest nicht über ihre gesamte Länge parallel zur Bewegungsrichtung des Schiebers. Genauer gesagt weist die betreffende Flanke zum vorderen Ende hin einen sich zunehmend der Führungsschiene 41 nähernden gekrümmten, abknickenden oder schrägen Verlauf auf. Wie später noch genauer verstanden werden wird, wird durch den Verlauf der mit der Rolle 51 in Kontakt kommenden Flanke des Schiebers 4 maßgeblich bestimmt, wie sich das Hin- und Herbewegen des Schiebers auf die relative Bewegbarkeit des Docking-Systems 2 auswirkt. Der Verlauf der mit der Rolle 51 in Kontakt kommenden Flanke des Schiebers 4 wird daher vorzugsweise abhängig von der gewünschten Wirkung des Hin- und Herbewegens des Schiebers 4 festgelegt.

Wie die Rolle 52 in Bezug zum Schieber 4 angeordnet ist, ist in Figur 3C veranschaulicht, welche eine Seitenansicht des Schiebers, genauer gesagt eine frontale Draufsicht auf die in der Figur 3B links dargestellte seitliche Flanke zeigt. Die Rolle 51 weist eine horizontal und rechtwinklig zur Bewegungsrichtung des Schiebers 4 verlaufende Drehachse auf und ist unter der dem Docking-System 2 zugewandten Unterseite des Schiebers 4 angeordnet, so dass die Unterseite des Schiebers mit der Rolle 52 in Kontakt kommen kann. Die mit der Rolle 51 in Kontakt kommende Unterseite des Schiebers 4 verläuft nicht, oder zumindest nicht über ihre gesamte Länge parallel zur Bewegungsrichtung des Schiebers. Genauer gesagt weist die Unterseite zum vorderen Ende des Schiebers 4 hin einen sich zunehmend der Führungsschiene 41 nähernden gekrümmten, abknickenden oder schrägen Verlauf auf. Wie später noch genauer verstanden werden wird, wird durch den Verlauf der mit der Rolle 52 in Kontakt kommenden Unterseite des Schiebers 4 maßgeblich bestimmt, wie sich das Hin- und Herbewegen des Schiebers auf die relative Bewegbarkeit des Docking-Systems 2 auswirkt. Der Verlauf der mit der Rolle 51 in Kontakt kommenden Unterseite des Schiebers 4 wird daher vorzugsweise abhängig von der gewünschten Wirkung des Hin- und Herbewegens des Schiebers 4 festgelegt.

Wie vorstehend bereits erwähnt wurde, ist der Schieber 4 über die erwähnten Führungselemente mit der Platte 11 der z-Achse 1 verbunden. Der Schieber 4 ist zwar längs der Führungselemente hin- und herbewegbar, aber kann ansonsten keine Relativbewegungen in Bezug zur Platte 11 ausführen. Die Rollen 51 und 52, mit welchen der Schieber 4 beim Hin- und Herbewegen in Kontakt kommt, sind auf dem Docking-System 2 angeordnet. Deshalb, und weil das Docking-System 2 in Bezug zur Platte 11 relativ bewegbar ist, kann das Docking-System 2 durch die Ausübung einer Kraft auf die Rollen 51 und 52 in Bezug zur Platte 11 bewegt werden. Genau dies passiert beim Hin- und Herbewegen des Schiebers 4.

Es sei angenommen, dass der Schieber 4 zunächst so weit zurückgezogen ist, dass, wenn überhaupt, nur der vordere Bereich des Schiebers 4 mit den Rollen 51 und 52 in Kontakt kommt. In diesem Zustand wird durch den Schieber 4 keine oder nur eine geringfügige Kraft auf die Rollen 51 und 52 ausgeübt, so dass also die relative Bewegbarkeit des Docking-Systems 2 durch den Schieber 4 nicht beeinflusst wird.

Bewegt man ausgehend hiervon den Schieber 4 weiter nach vorne, wird durch den Schieber 4 eine größere Kraft auf die Rollen 51 und 52 ausgeübt, so dass die Rollen 51 und 52 weggedrückt und zusammen mit den die Rollen tragenden Docking-System 2 relativ zur Platte 11 bewegt werden. Genauer gesagt wird das Docking-System 2 durch die auf die Rolle 52 wirkende Kraft in vertikaler Richtung bewegt, und wird das Docking-System 2 durch die auf die Rolle 51 wirkende Kraft horizontal, d.h. in x- und/oder in y-Richtung bewegt. Eine derartige Bewegung des Docking-Systems 2 hat zur Folge, dass das Docking-System in geringerem Umfang als vorher relativ zur Platte 11 bewegt werden kann. Schiebt man den Schieber 4 noch weiter nach vorne, so wird das Docking-System noch weiter bewegt, bis es schließlich sowohl vertikal als auch horizontal an die Bolzen 22 anschlägt und keine weitere Bewegung mehr möglich ist. Wenn dieser Zustand erreicht ist, lässt sich das Docking-System überhaupt nicht mehr relativ zur Platte 11 bewegen. Durch ein Zurückbewegen des Schiebers 4 kann die relative Bewegbarkeit des Docking-Systems 2 wieder freigegeben werden.

Durch den Schieber 4 ist also im Zusammenwirken mit den Rollen 51, 52 einstellbar, ob das Docking-System im über die Bolzen 22 mit der Platte 11 verbundenen Zustand relativ zum Platte 11 bewegbar ist oder nicht.

Dies ermöglicht es, die relative Bewegbarkeit des Docking-Systems bei Bedarf zu ändern. Dies kann beispielsweis dahingehend ausgenutzt werde, dass während des Andockens und Abdockens eines Spannrahmens 3 durch eine entsprechende Bewegung des Schiebers 4 eine relative Bewegbarkeit des Docking-Systems 2 in Bezug zur Platte 11 bzw. zur z-Achse 1 hergestellt wird. Eine solche relative Bewegbarkeit erleichtert das An- und Abdocken. Insbesondere kann es auch unter ungünstigen Bedingungen nicht zu einem Verkanten der ersten Verbindungsmittel 21 in den zugeordneten Öffnungen im Spannrahmen 3 kommen. Andererseits kann nach dem Andocken eines Spannrahmens 3 durch eine entsprechende Bewegung des Schiebers 4 eine relative Bewegbarkeit des Docking-Systems 2 in Bezug zur Platte 11 bzw. zur z-Achse 1 völlig unterbunden werden. Dadurch kann der Spannrahmen 3 ganz genau in die jeweils gewünschte Position gebracht werden.

Das hier vorgestellte Anordnung erweist sich somit unabhängig von den Einzelheiten der praktischen Realisierung als äußerst vorteilhaft.

### Bezugszeichenliste

- 1: z-Achse
- 2: Docking-System
- 3: Spannrahmen
- 4: Schieber

- 11: Platte von 1

- 21: erste Verbindungsmittel
- 22: zweite Verbindungsmittel
- 23: Einstellmechanismus
- 24: Durchgangsöffnung in 25
- 25: obere Platte von 2

- 41: Führungsschiene

- 51: Rolle
- 52: Rolle

- 221: erste Schraube
- 222: Hülse
- 223: zweite Schraube

- 2211: Kopf von 221
- 2212: Schaft von 221
- 2213: vorderer Bereich von 2212

- 2231: Kopf von 223
- 2232: Schaft von 223
- 2233: Vertiefung in 2231

## Patentansprüche

1. Docking-System (2) zum Andocken eines Gegenstandes (3) an ein zur Bewegung des Gegenstandes ausgelegtes Transport-System (1, 11), mit ersten Verbindungsmitteln (21), die zur Verbindung des Docking-Systems (21) mit dem zu bewegenden Gegenstand (3) ausgelegt sind, und zweiten Verbindungsmitteln (22), die zur Verbindung des Docking-Systems (2) mit dem Transport-System (1, 11) ausgelegt sind, wobei das Docking-System (2) einen Einstellmechanismus (24; 4, 41, 51, 52) enthält, über welchen einstellbar ist, ob das Docking-System (2) im über die zweiten Verbindungsmittel (22) mit dem Transport-System (1, 11) verbundenen Zustand relativ zum Transport-System (1, 11) bewegbar ist oder nicht, **dadurch gekennzeichnet, dass** der Einstellmechanismus (24; 4, 41, 51, 52) einen entlang von Führungselementen hin- und herbewegbaren Schieber (4) und mehrere Rollen (51, 52) enthält, und dass der Schieber (4) so angeordnet ist, dass er mit den Rollen in Kontakt kommen kann.

2. Docking-System nach Anspruch 1, **dadurch gekennzeichnet, dass** die zweiten Verbindungsmittel (22) dazu ausgelegt sind, so mit dem Transport-System (1, 11) verbunden zu werden, dass im bestimmungsgemäß verbundenen Zustand keine Relativbewegung zwischen den zweiten Verbindungsmitteln (22) und dem Transport-System (1, 11) stattfinden kann.

3. Docking-System nach Anspruch 1 oder 2, **dadurch gekennzeichnet, dass** die zweiten Verbindungsmittel (22) so mit dem Rest des Docking-Systems (2) verbunden sind, dass zwischen den zweiten Verbindungsmitteln (22) und dem damit verbundenen Teil des Docking-Systems (2) eine Relativbewegung stattfinden kann.

4. Docking-System nach einem der vorhergehenden Ansprüche, **dadurch gekennzeichnet, dass** die Führungselemente eine am Transport-System (1, 11) befestigbare Führungsschiene umfassen und dass der Schieber (4) entlang dieser Schiene hin- und herbewegbar ist.

5. Docking-System nach einem der vorhergehenden Ansprüche, **dadurch gekennzeichnet, dass** der Schieber (4) dazu ausgelegt ist, auf die Rollen (51, 52) eine Kraft auszuüben, wobei es von der jeweiligen Stellung des Schiebers (4) abhängt, wie groß die auf die Rollen (51, 52) ausgeübte Kraft ist.

6. Docking-System nach Anspruch 5, **dadurch gekennzeichnet, dass** das Docking-System (2) dazu ausgelegt ist, mit den Rollen (51, 52) relativ zum Transport-System (1, 11) bewegt zu werden, wenn durch den Schieber (4) eine entsprechende Kraft auf die Rollen (51, 52) ausgeübt wird.

7. Docking-System nach Anspruch 6, **dadurch gekennzeichnet, dass** das Docking-System (2) so aufgebaut ist, dass eine durch den Schieber (4) verursachte Bewegung des Docking-Systems (2) in Bezug zum Transport-System (1, 11) bewirkt, dass das Docking-System (2) danach nur noch in geringerem Umfang als vorher oder überhaupt nicht mehr relativ zum Transport-System (1, 11) bewegbar ist.

## Claims

1. Docking system (2) for docking an object (3) onto a transport system (1, 11) designed for moving the object, having first connecting means (21) which are designed for connecting the docking system (21) to the object (3) to be moved, and second connecting means (22) which are designed for connecting the docking system (2) to the transport system (1, 11), wherein the docking system (2) contains an adjusting mechanism (24; 4, 41, 51, 52) via which it is possible to adjust the docking system (2), in the state in which it is connected to the transport system (1, 11) via the second connecting means (22), in terms of whether it is moveable or not relative to the transport system (1, 11), **characterized in that** the adjusting mechanism (24; 4, 41, 51, 52) contains a slide (4), which is moveable back and forth along guide elements, and a plurality of rollers (51, 52), and **in that** the slide (4) is arranged such that it can come into contact with the rollers.

2. Docking system according to Claim 1, **characterized in that** the second connecting means (22) are designed to be connected to the transport system (1, 11) such that, in the state in which they are connected as intended, no relative movement between the second connecting means (22) and the transport system (1, 11) can take place.

3. Docking system according to Claim 1 or 2, **characterized in that** the second connecting means (22) are connected to the remainder of the docking system (2) such that a relative movement can take place between the second connecting means (22) and that part of the docking system (2) connected thereto.

4. Docking system according to one of the preceding claims, **characterized in that** the guide elements comprise a guide rail which can be fastened to the transport system (1, 11), and **in that** the slide (4) can be moved back and forth along this rail.

5. Docking system according to one of the preceding claims, **characterized in that** the slide (4) is designed to exert a force on the rollers (51, 52), with it being dependent on the respective position of the slide (4) how large the force is that is exerted on the rollers (51, 52).

6. Docking system according to Claim 5, **characterized in that** the docking system (2) is designed to be moved with the rollers (51, 52) relative to the transport system (1, 11) if a corresponding force is exerted on the rollers (51, 52) by the slide (4).

7. Docking system according to Claim 6, **characterized in that** the docking system (2) is designed such that a movement of the docking system (2) with respect to the transport system (1, 11) that is caused by the slide (4) has the effect that the docking system (2) is subsequently moveable only to a lesser extent than before or no longer has at all relative to the transport system (1, 11).

## Revendications

1. Dispositif d'amarrage (2) pour amarrer un objet (3) à un dispositif de transport (1, 11) conçu pour le déplacement de l'objet, avec des premiers moyens de liaison (21), qui sont conçus pour relier le dispositif d'amarrage (21) à l'objet à déplacer (3), et des seconds moyens de liaison (22), qui sont conçus pour relier le dispositif d'amarrage (2) au dispositif de transport (1, 11), dans lequel le dispositif d'amarrage (2) comporte un mécanisme de réglage (24; 4, 41, 51, 52) par lequel il est possible de définir si le dispositif d'amarrage (2), dans l'état relié au dispositif de transport (1, 11) par les seconds moyens de liaison (22), est ou n'est pas déplaçable par rapport au dispositif de transport (1, 11), **caractérisé en ce que** le mécanisme de réglage (24; 4, 41, 51, 52) comporte un coulisseau (4) à mouvement alternatif le long d'éléments de guidage et plusieurs rouleaux (51, 52), et **en ce que** le coulisseau (4) est disposé de telle manière qu'il puisse venir en contact avec les rouleaux.

2. Dispositif d'amarrage selon la revendication 1, **caractérisé en ce que** les seconds moyens de liaison (22) sont conçus pour être reliés au dispositif de transport (1, 1), de telle manière que dans un état correctement relié il ne puisse se produire aucun mouvement relatif entre les seconds moyens de liaison (22) et le dispositif de transport (1, 11).

3. Dispositif d'amarrage selon une revendication 1 ou 2, **caractérisé en ce que** les seconds moyens de liaison (22) sont reliés au reste du dispositif d'amarrage (2) de telle manière qu'il puisse se produire un mouvement relatif entre les seconds moyens de liaison (22) et la partie du dispositif d'amarrage (2) reliée avec ceux-ci.

4. Dispositif d'amarrage selon l'une quelconque des revendications précédentes, **caractérisé en ce que** les éléments de guidage comprennent un rail de guidage pouvant être fixé au dispositif de transport (1, 11) et **en ce que** le coulisseau (4) est déplaçable en mouvement alternatif le long de ce rail.

5. Dispositif d'amarrage selon l'une quelconque des revendications précédentes, **caractérisé en ce que** le coulisseau (4) est conçu pour exercer une force sur les rouleaux (51, 52), dans lequel la grandeur de la force exercée sur les rouleaux (51, 52) dépend de la position respective du coulisseau (4).

6. Dispositif d'amarrage selon la revendication 5, **caractérisé en ce que** le dispositif d'amarrage (2) est conçu pour être déplacé avec les rouleaux (51, 52) par rapport au dispositif de transport (1, 11), lorsqu'une force correspondante est exercée sur les rouleaux (51, 52) par le coulisseau (4).

7. Dispositif d'amarrage selon la revendication 6, **caractérisé en ce que** le dispositif d'amarrage (2) est construit de telle manière qu'un mouvement du dispositif d'amarrage (2) par rapport au dispositif de transport (1, 11) causé par le coulisseau (4) entraîne que le dispositif d'amarrage (2) n'est ensuite plus déplaçable que dans une plus faible mesure qu'antérieurement ou même plus du tout par rapport au dispositif de transport (1, 11).
